# EUROPEAN PATENT APPLICATION

(11) **EP 3 254 993 A1**
(43) Date of publication of application: **13.12.2017**
(21) Application number: 16305691.4
(22) Date of filing: 10.06.2016
(51) Int. Cl.: B65G 43/02, B65G 47/86

(54) **AN ARTICLE CONVEYING DEVICE, A METHOD OF OPERATING SUCH AN ARTICLE CONVEYING DEVICE AND AN ARTICLE HANDLING APPARATUS INCLUDING AT LEAST ONE SUCH AN ARTICLE CONVEYING DEVICE**

(71) Applicant: SIDEL PARTICIPATIONS, 76930 Octeville-sur-Mer (FR)
(72) Inventor: PINI, Stefano, 43126 Parma (IT); ZONI, Roberto, 43126 Parma (IT); FORNI, Lorenzo, 43126 Parma (IT)
(74) Representative: Siloret, Patrick

(57) **Abstract**

There is described a conveying device (7) comprising a plurality of retaining units (12); a conveying assembly (13) carrying the plurality of retaining units (12) and adapted to advance the retaining units (12) and a control unit (15) controlling the conveying device (7) between an operative configuration at which the conveying assembly (13) advances the retaining units (13) along a path (P2a) and a safety configuration distinct from the operative configuration at which each one of the plurality of retaining units (12) is detached from the receiving station (6).

## Description

### TECHNICAL FIELD

The present invention relates to an article conveying device, in particular for conveying receptacles, such as bottles, especially in plastic material, which the following description will refer to, although this is in no way intended to limit the scope of protection as defined by the accompanying claims.

The present invention also relates to a method of operating such an article conveying device.

Furthermore, the present invention relates to an article handling apparatus including at least one of such an article conveying device.

### BACKGROUND ART

It is known that articles, in particular receptacles, such as bottles and containers of base components such as glass, plastic, aluminum, steel, composite materials and others need to be handled within an article handling apparatus or article handling apparatuses for e.g. packaging pourable products such as still (such as still water) or carbonated liquids (such as sparkling water, soft drinks and beer), beverages (including juices, teas, sport drinks, wine, etc.), liquid cleaners, emulsions, suspensions, high viscosity liquids, etc. into the articles themselves.

Typically, a succession of articles is delivered to the handling apparatus or the handling apparatuses and the articles continuously advance through the handling apparatus or the handling apparatuses and during advancement the succession of articles is subjected to varying handling operations such as cleaning, sterilization, drying, filling, closing, labeling and end-of-line operations. Commonly the articles are advanced by a plurality of linear or rotary conveying devices which are distributed all over the article handling apparatus or the handling apparatuses.

Typically, each conveying device comprises a plurality of retaining units, each one having a gripping element and each one receiving one respective article advancing along a first path at a receiving station and to advance the article along a second path and to release the respective article at a delivery station downstream of the receiving station along the second path.

It is known that there are conveying devices which solely serve for the purpose of advancing the articles from the receiving to the delivery station, but there are also conveying devices which are additionally equipped with handling units for performing a handling operation on the articles during advancement of the articles from the receiving to the delivery station.

It is also known that there are handling apparatuses having one or more handling apparatus arranged along the advancement path and performing respective handling operations on the articles being advanced by the conveying device.

In the specific case of a conveying device of the rotary type, the conveying device typically comprises a carousel rotatable around a rotation axis and carrying a plurality of retaining units. The carousel rotates around the rotation axis for advancing the retaining units along a circular path through the receiving and the delivery station.

In the case of the occurrence of an electrical or mechanical failure the correct rotation of the carousel is impossible or at least limited which typically leads to the collision of articles and the need of an emergency stop leading to a complete and costly suspension of the whole production process.

The emergency stop is not instantaneous, but typically requires a few minutes before being fully active. This leads to significant losses of articles and possibly also of the pourable product.

Furthermore, the collision of the articles can also lead to cascade effects possibly leading to damages of other handling devices of the article handling apparatuses.

### DISCLOSURE OF INVENTION

It is therefore an object of the present invention to provide a conveying device to overcome, in a straightforward and low-cost manner, the aforementioned drawbacks.

It is a further object of the present invention to provide a method to overcome, in a straightforward and low-cost manner, the aforementioned drawbacks.

Furthermore, it is an object of the present invention to provide a handling apparatus to overcome, in a straightforward and low-cost manner, the aforementioned drawbacks.

According to the present invention, there is provided a conveying device as claimed in claim 1.

According to the present invention, there is also provided a method as claimed in claim 11.

According to the present invention, there is also provided a handling apparatus as claimed in claim 16.

### BRIEF DESCRIPTION OF THE DRAWINGS

One non-limiting embodiment of the present invention will be described by way of example with reference to the accompanying drawings, in which:
Figure 1 shows a top plan view of an article handling apparatus having conveying devices for conveying articles, in particular bottles according to the present invention, with parts removed for clarity;
Figure 2 shows a larger-scale side perspective view of one of the conveying devices of Figure 1, with parts removed for clarity;
Figure 3 shows a side view of the conveying device of Figure 2 in a first configuration, with parts removed for clarity;
Figure 4 shows a side view of the conveying device of Figure 2 in a second configuration, with parts removed for clarity;
Figure 5 shows a side view of a detail of the conveying device of Figure 3, with parts removed for clarity; and
Figure 6 shows a side view of a detail of the conveying device of Figure 4, with parts removed for clarity.

### BEST MODES FOR CARRYING OUT THE INVENTION

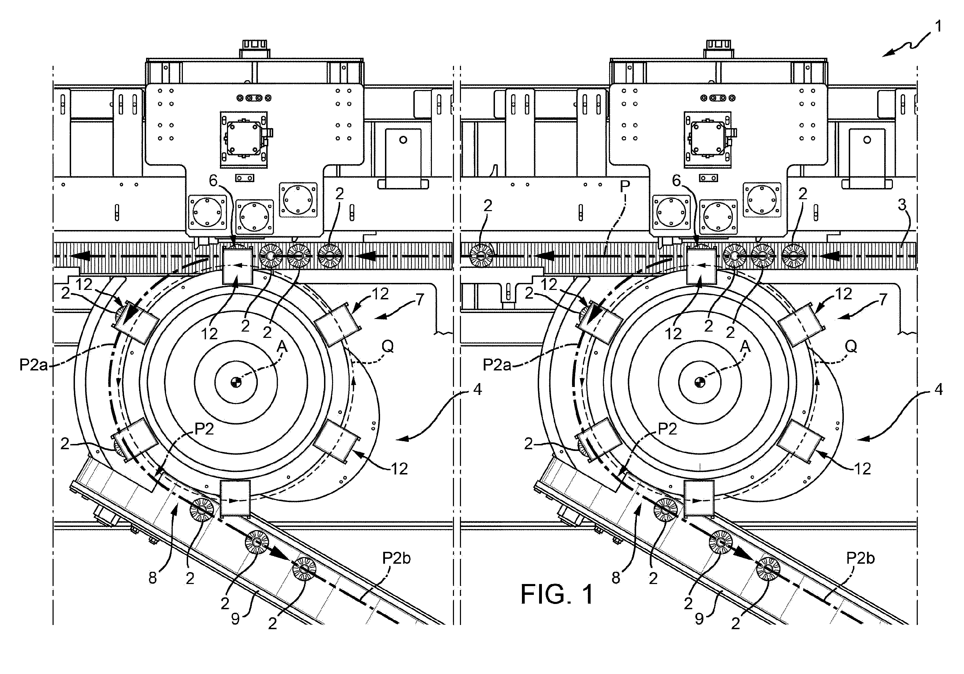

Number 1 in Figure 1 indicates as a whole a article handling apparatus adapted to handle articles, in particular bottles 2. Apparatus 1 is in particular configured to transport bottles 2 and to distribute bottles 2 along different paths so as to direct bottles 2 to different processing devices (not shown).

In the following, the description of the example embodiment is based on apparatus 1 being adapted to handle receptacles, in particular bottles 2, which, however, must be understood in a non-limiting manner as also other articles such as containers and pre-forms may be handled by apparatus 1.

Apparatus 1 comprises:
- a primary conveyor 3, in the example shown a first conveyor belt adapted to advance a succession of bottles 2 along a first article path P, in particular path P being linear; and
- one or more conveying groups 4, two in the example shown in Figure 1, arranged adjacent to primary conveyor 3 at respective receiving stations 6 and each one configured to selectively receive bottles 2 from conveyor 3 at the relative receiving station 6 and to transfer them away from the respective station 6 itself.

In more detail, each conveying group 4 is adapted to receive bottles 2 at the respective receiving station 6 and to advance bottles 2 from the respective receiving station 6 along a respective second article path P2.

Each conveying group 4 comprises:
- a conveying device 7 adapted to convey bottles 2 from the respective receiving station 6 to a respective delivery station 8 along a first portion P2a of path P2, station 8 being downstream of station 6 along path P2; and
- a secondary conveyor 9, in particular a second conveyor belt arranged adjacent to conveying device 7 at delivery station 8 and adapted to receive bottles 2 at station 8 and to convey bottles 2 along a second portion P2b of path P2 towards a handling device (not shown and known as such).

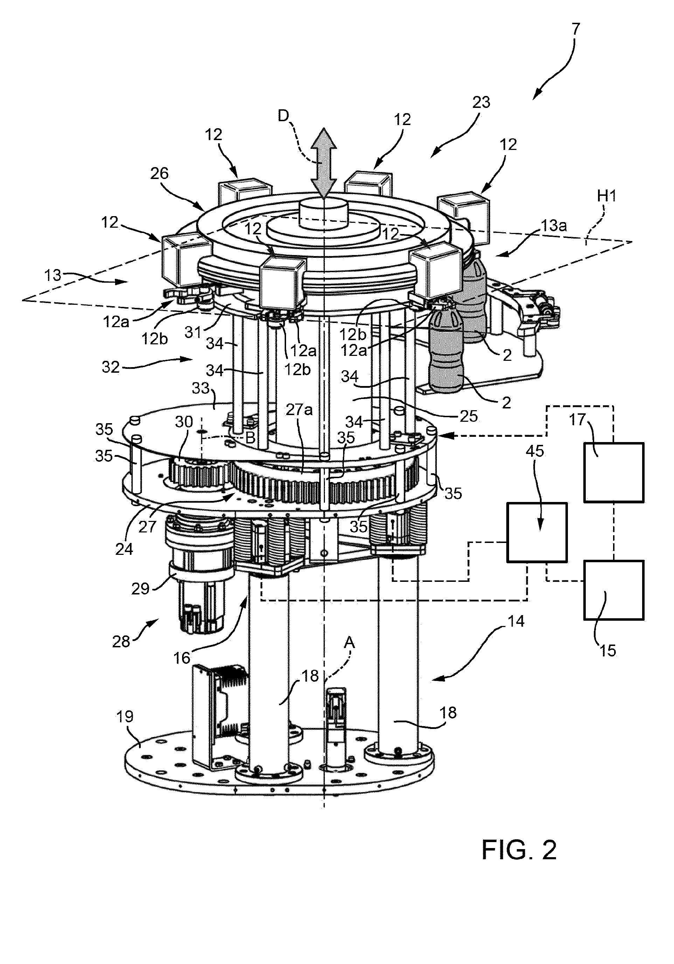

With particular reference to Figure 2, each conveying device 7 comprises:
- a plurality of retaining units 12, each one adapted to receive one respective bottle 2 at station 6 and, preferably, each one having one respective gripping element 12a configured to selectively grip one respective bottle 2;
- a conveying assembly 13 carrying and being adapted to advance the plurality of retaining units 12; and
- a support structure 14 moveably carrying conveying assembly 13.

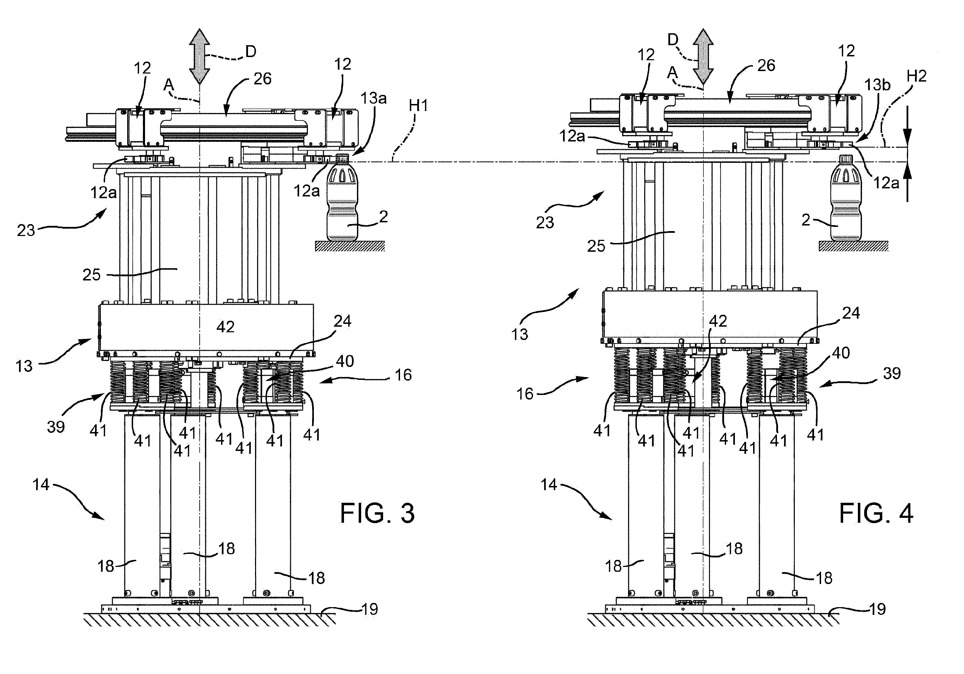

Each conveying device 7 further comprises a control unit 15 adapted to control conveying assembly 13 between:
- an operative configuration (see Figure 3) at which retaining units 12 are adapted to receive one respective bottle 2 advancing along path P at station 6, to retain the respective bottle 2 during advancement along portion P2a from station 6 to station 8 and to release the respective bottle 2 at station 8; and
- a safety configuration (see Figure 4) distinct from the operative position and at which retaining units 12 are detached from station 6; i.e. retaining units 12 are prevented from receiving one respective bottle 2 at station 6 and to interfere with bottles 2 at station 6.

Each conveying device 7 further has actuation means 16 adapted to set conveying assembly 13 into its operative or safety configuration. More specifically, actuation means 16 are configured to adjust the elevation of conveying assembly 13, in particular to move conveying assembly 13 into a direction D, preferably to or away from support structure 14. Even more specifically, actuation means 16 are adapted to position retaining units 12 at a first, in particular lower elevation 13a (see Figure 3) or a second, in particular upper elevation 13b (see Figure 4) by moving of conveying assembly 13 and the change of elevation of conveying assembly 13. In particular, conveying assembly 13 is adapted to be controlled into its operative configuration for positioning retaining units 12 at elevation 13a and to be controlled in its safety configuration for positioning retaining units 12 at elevation 13b.

Furthermore, each conveying device 7 has a monitoring unit 17 adapted to monitor the state of conveying device 7 itself, in particular by preferably monitoring at least one operational parameter of conveying device 7, even more preferably a plurality of operational parameters.

Furthermore, monitoring unit 17 is adapted to detect or determine:
- a normal working condition of conveying device 7 at which conveying device 7 is adapted to correctly operate; i.e. conveying assembly 13 is able to correctly advance retaining units 12 and retaining units 12 are able to receive, retain and release bottles 2; and
- an atypical working condition of conveying device 7 at which conveying device 7 is hindered from operating correctly; i.e. conveying assembly 13 is prevented from correctly advancing retaining units 12 and/or one or more retaining units 12 are prevented to receive, retain and/or release bottles 2.

Monitoring unit 17 is further configured to generate an input signal about the normal or atypical working condition and to send the input signal to control unit 15. Unit 15 is adapted to receive the input signal and to control conveying assembly 13 into its operative or safety configuration as a function of the input signal, in particular into its operative configuration in case of the normal working condition or into its safety configuration in case of the atypical working condition.

With particular reference to Figures 1 to 4, support structure 13 comprises a plurality of support pillars 18, in the example shown three, carrying conveying assembly 13, in particular actuation means 16 being interposed between support structure 14 and conveying assembly 13.

Support pillars 18 are mounted to a support plate 19, support plate 19 being secured to the plant floor or alternatively of a support surface of a handling device (not shown) of apparatus 1. Alternatively, support pillars 18 could be directly mounted to the plant floor or the support surface.

It should be noted that in the specific embodiment support pillars 18 are fixedly mounted to support plate 19. In an alternative not shown, apparatus 1 could also comprise elevation-adjusting means adapted to move support pillars 18 to or away from support plate 18 so as to adjust a base height of conveying device 7; i.e. the elevation-adjusting means would be adapted to simultaneously move support structure 14 and conveying assembly 13.

With particular reference to Figures 1 to 4, conveying assembly 13 comprises a carousel portion 23 rotatable around a rotation axis A and peripherally carrying retaining units 12, in particular gripping elements 12a and adapted to advance retaining units 12, in particular gripping elements 12a through rotation around axis A. More specifically, axis A is parallel to direction D and even more specifically axis A has a vertical orientation.

In more detail, carousel portion 23 is configured to advance retaining units 12, in particular gripping elements 12a in the operative configuration of conveying assembly 13 along a circular path Q through stations 6 and 8. In particular, path Q lies within a first plane HI.

In even more detail, retaining units 12, in particular gripping elements 12a extend along a plane H1 in the operative configuration of conveying assembly 13 and extend along a second plane H2 in the security configuration of conveying assembly 13.

In particular, planes H1 and H2 are spaced apart from and parallel to each other. Even more particular, planes H1 and H2 are orthogonal to axis A, even more particularly have a horizontal orientation. Furthermore, in the specific case shown, plane H2 lies above plane H1 and planes H1 and H2 define a measure of the elevation of retaining units 12.

In particular, path Q lies within plane H1.

Furthermore, each conveying assembly 13 comprises a non-rotating base portion 24, in the specific example shown a base plate, rotatably carrying carousel portion 23 and being connected to actuation means 16.

In greater detail, carousel portion 23 comprises:
- a carrier shaft 25 adapted to rotate around axis A; and
- a rotating platform 26 carrying retaining units 12, in particular gripping elements 12a and being carried by shaft 25 and designed to rotate around axis A simultaneously with shaft 25.

Furthermore, carousel portion 23 has a transmission member 27, in the specific example shown a slewing ring connected to shaft 25 and configured to cooperate with a driving assembly 28 of device 7, in particular of conveying assembly 13 for actuating rotation of carousel portion 23, in particular of shaft 25 and rotating platform 26.

In more detail, transmission member 27 has a rotatable annular outer portion 27a connected to driving assembly 28 and portion 27a being adapted to rotate around axis A.

In greater detail, driving assembly 28 comprises an electrical motor 29 having a motor shaft (not shown) rotatable around an axis B and a gear element 30, in the specific example shown a toothed gear wheel coupled to the motor shaft and to transmission member 27, in particular portion 27a for transferring rotation of the motor shaft around axis B to transmission member 27 for rotating carousel portion 23, in particular shaft 25 and platform 26 around axis A.

Furthermore, driving assembly 28 is mounted to base portion 24.

With particular reference to Figure 2, device 7, in particular conveying assembly 13 further comprises a cam assembly 31 adapted to interact with respective cam followers 12b of retaining units 12 for selectively moving in a manner known as such each respective gripping element 12a between a closed configuration at which each gripping element 12a is adapted to retain, in particular to grip one respective bottle 2 and an open configuration at which each gripping element 12a is adapted to receive or release the respective bottle 2.

In particular, in use, cam assembly 31 is adapted to interact with cam followers 12b so as that each gripping element 12a with conveying assembly 13 being in its operative configuration advances along path Q is in its open configuration at stations 6 and 8 and in its closed configuration during advancement between stations 6 and 8.

Furthermore, conveying device 7, in particular conveying assembly 13 comprises a cam carrier structure 32 coupled to base portion 24 and carrying cam assembly 31.

In more detail, cam carrier structure 32 comprises:
- an upper carrier ring plate (not shown) surrounding shaft 25 and carrying cam assembly 31;
- a lower carrier ring plate 33 surrounding shaft 25 and, in particular indirectly carried by base portion 24; and
- a plurality of beam elements 34 mounted to lower carrier ring plate 33, equally spaced around shaft 25 and carrying the upper carrier ring plate.

Furthermore, conveying assembly 32 comprises a plurality of support elements 35, in particular having parallelepiped shapes, arranged between base portion 24 and ring plate 33 and being mounted to base portion 24 and carrying ring plate 33.

It should be noted that in the specific example shown, in the normal working condition of conveying device 7 carousel portion 23 carrying retaining units 12 and adapted to advance retaining units 12 along path Q is able to correctly rotate around axis A and retaining units 12 are able to receive, retain and release bottles 2. In the atypical configuration the correct operation of conveying assembly 23 is prevented by some kind of malfunction. For this purpose, preferably, monitoring unit 17 comprises a plurality of sensing elements (not shown) adapted to detect or determine information about different operational parameters of conveying device 7. Preferably, monitoring unit 17 is configured to monitor at least the function of retaining units 12; i.e. monitoring unit 17 is apt to monitor function of each gripping element 12a. Furthermore, favorably, monitoring unit 17 is configured to monitor the characteristics of the rotation of conveying portion 23 around axis A. Monitoring unit 17 is preferably also designed to monitor operation of driving assembly 28 needed for driving rotation of carousel portion 23 around axis A. Furthermore, favorably, monitoring unit 17 is adapted to monitor the electrical power supply and management of conveying device 7.

With particular reference to Figures 3 to 6, actuation means 16 comprise:
- a biasing device 39 adapted to bias conveying assembly 13 into its operative or safety configuration,; and
- a counteracting device 40 adapted to counteract the action of biasing device 39 for setting the conveying assembly 13 from the operative configuration into the safety configuration or from the safety configuration to the operative configuration.

More specifically, biasing device 39 is configured to direct conveying assembly 13 away from support structure 14 and counteracting device 40 is configured to direct conveying assembly 13 to support structure 14.

Even more specifically, biasing device 39 is adapted to position, through movement of conveying assembly 13, retaining units 12 at elevation 13a (see Figure 3) or at elevation 13b (see Figure 4), in the specific example shown at elevation 13b. Counteracting device 40 is designed towards move retaining units 12, through movement of conveying assembly 13, from elevation 13a to elevation 13b or from elevation 13b to elevation 13a, in the specific example shown from elevation 13b to elevation 13a.

In greater detail, biasing device 39 is interposed between support structure 14 and conveying assembly 13. Biasing device 39 comprises a plurality of tensioning members 41, in the specific case shown springs, configured to force conveying assembly 13 away from support structure 14, in particular for biasing conveying assembly 13 into its safety configuration. More specifically, tensioning members 41 are coupled to support structure 14 and to conveying assembly 13, in particular each tensioning member 41 being carried by one respective pillar 18 and being interposed between the respective pillar 18 and base portion 24 of conveying assembly 13. In particular, each pillar 18 carries more than one tensioning members 41, four in the specific case shown.

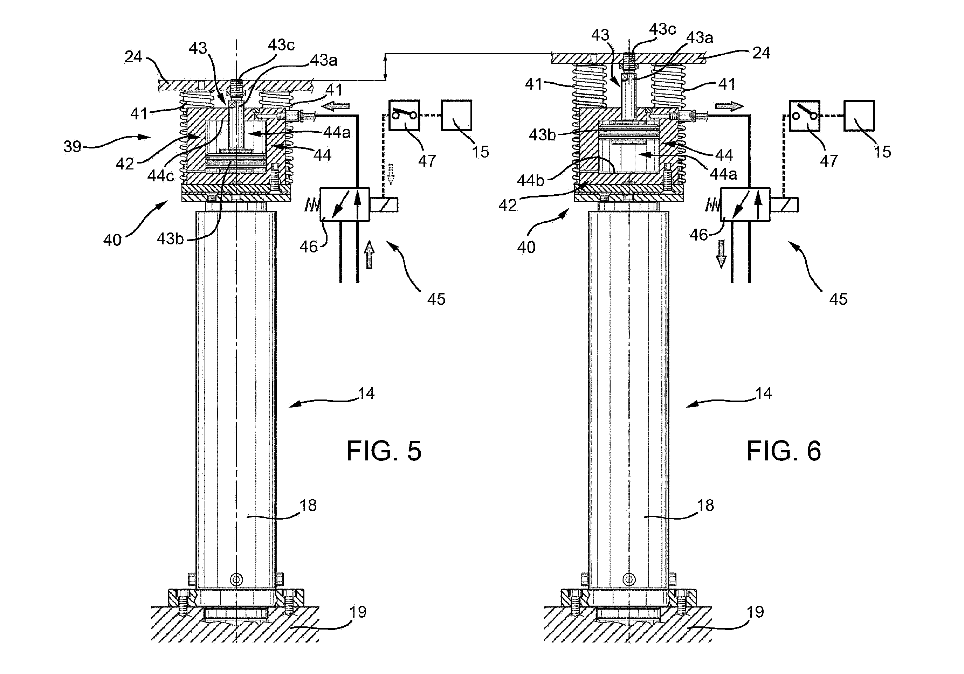

With particular reference to Figures 5 and 6, control unit 15 is adapted to control activation or deactivation of counteracting device 40 as a function of the normal or atypical working condition of the conveying device 7.

In more detail, counteracting device 40 comprises a plurality of actuation units 42, four in the specific example shown, connected to conveying assembly 13 and adapted to direct the conveying assembly 13 along direction D towards support structure 14. In particular, each actuation unit 42 is carried by one respective pillar 18 and is connected to base portion 24. Even more particularly, each actuation unit 42 is configured to counteract the force exerted by the respective tensioning members 41 carried by the relative pillar 18. In more detail, each actuation unit 42 comprises:
- a pulling member 43 connected to conveying assembly 13 and controllable into a retracted configuration (see Figure 5) for moving or pulling conveying assembly 13 against the action of tensioning members 41 towards support structure 14, in particular for positioning retaining units 12 at elevation 13a; and
- a cylinder block 44 moveably and partially housing the respective pulling member 43, in particular being mounted to the respective pillar 18.

Furthermore, each pulling member 43 is adapted to move into an extracted configuration, in particular for following conveying assembly 13 directed by action of biasing device 39 away from support structure 14.

In more detail, each pulling member 43 comprises a rod element 43a connected to base portion 24 and a piston head 43b moveably arranged within cylinder block 44. Furthermore, each rod portion 43a has a threaded section 43c screwed into base portion 24 so as to secure the respective pulling member 43 to base portion 24.

In further detail, each cylinder block 44 comprises a cavity 44a adapted to be pressurized for setting the respective pulling member 43 into its retracted configuration. Each cylinder block 44 also has a bottom portion 44b and a top portion 44c designed to partially delimit the respective cavity 44a and to delimit movement of the respective pulling member 43, in particular through interaction with the respective piston head 43b.

Counteracting device 40 further comprises a pressurizing assembly 45, only partially shown to the extend needed for the understanding of the invention, coupled to the respective cylinder block 44 of each one of the plurality of actuation units 42 and, in particular being controlled by control unit 15.

More specifically, pressurizing assembly 45 is adapted to simultaneously activate each actuation unit 42. Even more specifically, pressurizing assembly 45 is configured to simultaneously pressurize the respective cylinder blocks 44 of actuation units 42, in particular the respective cavities 44a for setting the respective pulling members 43 into their retracted configurations or to simultaneously allow for depressurization of cylinder blocks 44.

Even more specifically, pressurizing assembly 45 comprises:
- a pressure source configured to provide for a pressurized fluid (not shown and known as such);
- at least one valve element 46, in the specific example a three-way valve, coupled to the pressure source and cylinder blocks 44, in particular adapted to establish a fluid connecting between the pressure source and cavities 44a for allowing for pressurization of cavities 44a with the pressurized fluid or to allow for evacuation of the pressurized fluid from cavities 44a for depressurizing cavities 44a; and
- at least one switch element 47 configured to control valve element 46 so as to establish the fluid connection between the pressure source and the cavities 44a or to allow for evacuation of cavities 44a.

In particular, switch element 47 is controlled by control unit 15 between at least an on-state (see Figure 5) and an off-state (see Figure 6). In the on-state switch element 47 controls valve element 46 in such a manner to establish the fluid connection between the pressure source and cavities 44a and in the off-state switch element 47 controls valve element 46 in such a manner that the pressurized fluid exits from cavities 44a.

In use, each bottle 2 of a succession of bottles 2 advances along path P and is transferred from conveyor 3 by one of conveying groups 4 or is further advanced along path P in case none of conveying groups 4 transfers bottles 2 from conveyor 3.

Conveying assembly 13 is controlled by control unit 15 into its operative or safety configuration.

Control unit 15 sets conveying assembly 13 into the operative or safety configuration through controlling actuation means 16. In particular, by controlling actuation means 16 conveying assembly 13 is moved to or way from support structure 14. More specifically, conveying assembly 13 is controlled into the operative or safety configuration for positioning retaining units 12 at elevation 13a or 13b, respectively. In particular, retaining units 12 are positioned at elevation 13a or 13b through movement of conveying assembly 13, even more particularly by altering the elevation of conveying assembly 13.

More specifically, control unit 15 controls conveying assembly 13 into the operative configuration by initiating activation of counteracting device 40. More specifically, pressurizing assembly 45 pressurizes cylinder blocks 44, in particular for moving pulling members 43 into the respective retracted configuration. The pressure is chosen in such a manner to exceed the force provided for by biasing device 39, in particular tensioning members 41. Even more specifically, setting switch element 47 into the on-state sets valve element 46 so as to establish the fluid connection of the pressure source with cavities 44a leading to the pressurized fluid entering cavities 44a; in particular the pressurized fluid acting on the respective piston heads 43b for forcing these towards the respective bottom portions 44b.

Furthermore, control unit 15 controls conveying assembly 13 into the safety configuration by inducing deactivation of counteracting device 40. More specifically, control unit 15 controls pressure assembly 45 so as to allow for a depressurization of cylinder blocks 44. Even more specifically, by setting switch element 47 into the off-state the valve element 46 is controlled to allow for evacuation of the pressurized fluid from cavities 44a. In particular, depressurization allows for the force provided for by biasing device 39, in particular by tensioning members 41 to dominate so as to guide conveying assembly 13 away from support structure 14. As pull members 43 are connected to conveying assembly 13 movement of conveying assembly 13 leads to movement of pull members 43 into their respective extracted configurations.

Preferably, monitoring unit 17 monitors the state of conveying device 7 and detects or determines the normal or the atypical working condition of conveying device 7. Monitoring unit 17 sends the input signal about the normal or atypical working condition to control unit 15 which sets conveying assembly 13 into its operative configuration in case of the normal working condition and into its safety configuration in case of the atypical working condition.

In the operative configuration of conveying assembly 13, conveying device 7 receives bottles 2 at station 6 and advances these along portion P2a to station 8. In more detail, in the operative configuration of conveying assembly 13, conveying assembly 13, in particular carousel portion 23 advances retaining units 12 through stations 6 and 8 and each retaining unit 12 receives one respective bottle 2 at receiving station 6, retains the respective bottle 2 during advancement between station 6 and 8, and releases the respective bottle 2 at station 8 so as to transfer the respective bottle 2 to secondary conveyor 9. Secondary conveyor 9 further advances bottles 2 received from conveying device 7 along portion P2b.

In the safety configuration of conveying device 7, the latter is hindered from receiving bottles 2 advancing along path P. In particular, retaining units 12 are detached from receiving station 6. Therefore, retaining units 12 are prevented from interfering with bottles 2; bottles 2 further advance without any disturbance.

The advantages of conveying device 7, as well of apparatus 1 and the method of operating conveying device 7 according to the present invention will be clear from the foregoing description.

In particular, in case of a malfunction of conveying device 7, the latter can be set into the safety configuration so as not to interfere with bottles 2 advancing along path P. There is no need to interrupt the overall operation of apparatus 1 as bottles 2 continue to advance undisturbedly.

It is a further advantage that by solely controlling counteracting device 40, in particular pressurizing assembly 45 it is possible to detach all retaining units 12 from station 6 by, in particular lifting all the conveying assembly 13 which in use rotates around axis A. There is no need of complicated control mechanisms.

It is an even further advantage that control unit 15 must activate counteracting device 40 for setting conveying assembly 13 into the operative configuration. Biasing device 39 sets conveying assembly 13 into its safety configuration also in case of e.g. a major power failure of conveying device 7.

Clearly, changes may be made to conveying device 7 as described herein without, however, departing from the scope of protection as defined in the accompanying claims.

In an alternative embodiment not shown counteracting device 40 could comprise a plurality of electrical actuators and the respective electrical control means instead of actuation elements 42 and pressurizing assembly 45.

In an even alternative embodiment not shown tensioning members 41 could be replaced by electric, pneumatic or hydraulic actuators.

## Claims

1. Article conveying device (7) for conveying articles (2), in particular receptacles (2); the conveying device (7) comprising
- a plurality of retaining units (12), each one adapted to receive, retain and release one respective article (2);
- a conveying assembly (13) carrying the plurality of retaining units (12) and adapted to advance the retaining units (12);
***characterized in*** further comprising a control unit (15) adapted to control the conveying assembly (13) between:
- an operative configuration at which the conveying assembly (13) advances the retaining units (13) along a path (P2a) and through a receiving station (6) and a delivery station (8); wherein each one of the plurality of retaining units (12) is adapted to receive one respective article (2) at the receiving station (6), to retain the respective article (2) during advancement of the retaining unit (12) from the receiving station (6) to the delivery station (8) and to release the respective article (2) at the delivery station (8); and
- a safety configuration distinct from the operative configuration at which each one of the plurality of retaining units (12) is detached from the receiving station (6).

2. The conveying device according to claim 1 further comprising a monitoring unit (17) adapted to monitor the state of the conveying device (7) and to detect or determine a normal working condition or an atypical working condition of the conveying device (7); wherein the control unit (15) is adapted to receive an input signal from the monitoring unit (17) about the normal working condition or the atypical working condition of the conveying device (7); wherein the control unit (15) is configured to control the conveying assembly (13) into its operative configuration in case of the normal working condition and to control the conveying assembly (13) into its safety configuration in case of the atypical working condition.

3. The conveying device according to claim 1 or 2, wherein in the operative configuration of the conveying assembly (13) the plurality of retaining units (12) are arranged at a first elevation (13a) and in the safety configuration of the conveying assembly (13) the plurality of retaining units (12) are arranged at a second elevation (13b) distinct from the first elevation (13a).

4. The conveying device according to any one of claims 1 to 3 further comprising:
- a support structure (14) moveably carrying the conveying assembly (13); and
- actuation means (16) adapted to move the conveying assembly (13) to or away from the support structure (14) for moving the conveying assembly (13) into the operative or the safety configuration.

5. The conveying device according to claim 4, wherein the actuation means (16) comprise:
- a biasing device (39) adapted to bias the conveying assembly (13) into its operative or safety configuration; and
- a counteracting device (40) adapted to counteract the action of the biasing device (39) for controlling the conveying assembly (13) from the operative configuration into the safety configuration or from the safety configuration to the operative configuration;
wherein the control unit (15) is adapted to control activation or deactivation of the counteracting device (40) as a function of the normal or atypical working condition of the conveying device (7).

6. The conveying device according to claim 5, wherein the biasing device (39) comprises a plurality of tensioning members (41) configured to force the conveying assembly (13) away from the support structure (14);
wherein the counteracting device (40) comprises a plurality of actuation units (42) connected to the conveying assembly (13) and adapted to direct the conveying assembly (13) towards the support structure (14).

7. The conveying device according to claim 6, wherein each one of the plurality of actuation units (42) comprises a pulling member (43) connected to the conveying assembly (13) and controllable into a retracted configuration for directing the conveying assembly (13) towards the support structure (14).

8. The conveying device according to claim 7, wherein each one of the plurality of actuation units (42) further comprises a cylinder block (44) moveably and at least partially housing the respective pulling member (43); wherein the counteracting device (40) comprises a pressurizing assembly (45) coupled to the respective cylinder block (44) of each one of the plurality of the actuation units (42); wherein the pressurizing assembly (45) is adapted to simultaneously pressurize the respective cylinder blocks (44) of the actuation units (42) for moving the respective pulling members (43) simultaneously into their retracted configurations.

9. The conveying device according to any one of claims 5 to 8, wherein the biasing device (39) and the counteracting device (40) are interposed between the support structure (14) and the conveying assembly (13).

10. The conveying device according to any one of the preceding claims, wherein each one of the plurality of retaining units (12) comprises a gripping element (12a) adapted to grip one respective article (2);
wherein the conveying assembly (13) comprises a carousel portion (23) rotatable around a rotation axis (A) and the carousel portion (23) carries the plurality of gripping elements (12a) and is adapted to advance the gripping elements (12a) along a conveying path (Q) through rotation of the carousel portion (23) around the rotation axis (A).

11. The conveying device according to claim 10, wherein in the operative configuration of the conveying assembly (13) the plurality of gripping elements (12a) extend along a first plane (H1) and in the safety configuration the plurality of gripping elements (12a) extend along a second plane (H2) spaced apart from the first plane (H1); wherein the conveying path (Q) lies within the first plane (H1).

12. Method of operating a conveying device (7) adapted to convey articles (2), in particular receptacles (2); the conveying device (7) comprising:
- a plurality of retaining units (12), each one adapted to receive, retain and release one respective article (2);
- a conveying assembly (13) carrying the plurality of retaining units (12) and adapted to advance the retaining units (12);
the method being ***characterized in*** comprising the step of a control unit (15) of the conveying device (7) controlling the conveying assembly (13) between:
- an operative configuration at which each one of the plurality of retaining units (12) receives one respective article (2) at a receiving station (6), retains the respective article (2) during advancement of the retaining unit (12) from the receiving station (6) to a delivery station (8) and releases the respective article (2) at the delivery station 8); and
- a safety configuration distinct from the operative configuration at which each one of the plurality of retaining units (12) is detached from the receiving station (6).

13. The method according to claim 12, wherein the conveying device (7) further comprises a monitoring unit (17); wherein the method further comprises the steps of:
- the monitoring unit (17) monitors the state of the conveying device (7) and detects or determines a normal working condition or an atypical working condition of the conveying device (7);
- the monitoring unit (17) sends an input signal about the normal or atypical working condition to the control unit (15); and
- the control unit (15) controls the conveying assembly (13) into is operative configuration in case of the normal working condition and into its safety configuration in case of the atypical working condition.

14. The method according to claim 12 or 13, wherein in the operative configuration of the conveying assembly (13) the plurality of retaining units (12) are arranged at a first elevation (13a) and in the safety configuration of the conveying assembly (13) the plurality of retaining units (12) are arranged at a second elevation (13b).

15. The method according to any one of claims 12 to 14, wherein the conveying device comprises
- a support structure (14) moveably carrying the conveying assembly (13); and
- actuation means (16) adapted to move the conveying assembly (13) to or away from the support structure (14) for moving the conveying assembly (13) into the operative or the safety configuration;
the method comprising the further steps of the actuation means (16) moving the conveying assembly (13) to or way from the support structure (14) in dependence of the operative or the safety configuration.

16. An article handling apparatus (1) for handling articles (2), in particular receptacles (2) comprising:
- a primary conveyor (3) adapted to advance a succession of articles (2) along a first article path (P) ;
- one or more conveying devices (7) according to any one of claims 1 to 11, each arranged adjacent to the primary conveyor (3) at a respective receiving station (6) and adapted to receive the articles (2) at the respective receiving station (6) and to advance the articles (2) to a respective delivery station (8); and
- one or more secondary conveyors (9), each one arranged adjacent to one respective conveying device (7) of the one or more conveying devices (7) at the respective delivery station (8) and adapted to receive the articles (2) at the respective delivery station (8).
